Europäisches Patentamt

European Patent Office

Office européen des brevets

(11) Publication number: **0 336 025 B1**

# EUROPEAN PATENT SPECIFICATION

(45) Date of publication of patent specification: **02.12.92** (51) Int. Cl.⁵: **G01B 7/02**, G01R 27/06

(21) Application number: **88302996.9**

(22) Date of filing: **05.04.88**

(54) **Measurement method and apparatus using time domain reflectrometry.**

(43) Date of publication of application:
**11.10.89 Bulletin 89/41**

(45) Publication of the grant of the patent:
**02.12.92 Bulletin 92/49**

(84) Designated Contracting States:
**AT CH DE ES FR GB IT LI NL SE**

(56) References cited:
**EP-A- 0 229 505
US-A- 3 898 555
US-A- 4 135 397**

**WIRELESS WORLD, vol. 89, no. 1571, August
1983, page 39, Olchester, GB; A. SUTER:
"Direct reading cable reflectometer"**

(73) Proprietor: **Dr. Johannes Heidenhain GmbH
Dr.-Johannes-Heidenhain-Strasse 5 Postfach
1260
W-8225 Traunreut(DE)**

(72) Inventor: **Oswald, Gordon Kenneth Andrew
Seatonhurst Bluntisham Road
Colne Huntingdon Cambridgeshire PE17
3LY(GB)**

(74) Representative: **Morton, Colin David et al
Keith W Nash & Co. Pearl Assurance House
90-92 Regent Street
Cambridge CB2 1DP(GB)**

## Description

### Field of the invention

This invention relates to a measurement method and to measurement apparatus using time domain reflectometry (TDR).

### Background to the invention

The technique of time domain reflectometry is widely established as a means of identifying the presence of faults within electromagnetic cables and transmission lines, and of locating their position. Any fault will modify the characteristic impedance of the transmission line to incident electromagnetic waves which will hence be partially reflected. The reflected wave can be detected at the input end of the cable and the location of the fault determined from the time at which the reflection arrives.

Known from the prior art, in particular US Patent No 4135397, is a level measuring system for determining the height of grain stored in a silo. A pulse is directed downwardly through a transmission line suspended in the silo and is reflected at the grain/air interface. The difference between time of transmission and the time of reception of the reflected pulse is a measure of the level of grain in the silo. The system is not of general applicability, being dependent on passage of the line through a media interface. It also requires for accuracy the provision of calibrating impedance.

Of more general applicability is a linear distance measuring system known from US Patent No 3898555. In this system a single emitting target is movably mounted along a sonic transmission line to generate a return pulse responsively to reception of an input pulse directed into the line. Special precautions have to be taken to avoid reflections of sonic pulses at the terminals of the line.

### The invention

According to one aspect of the present invention, there is provided a method of precision length or position measurement which comprises:- a) extending a transmission line in a predetermined spatial position and orientation with respect to an object on which a length or position measurement is required; b) moving a target along the transmission line; directing a signal into an input end of the line and measuring the time at which a return signal is received from the target thereby to determine a length or position measurement on the object; characterised in that the transmission line (24) is a line having an impedance altered at the position of the target (28) due to the proximity of the target material, the signal is an electromagnetic signal directed through a coupler (22) into the input end of the line so as to be partially reflected by the impedance change at said input end and partially reflected at the target position, and the difference in times between which the input end and the target position reflected electromagnetic signals are returned through the coupler is measured to enable precise determination of the target position along the line.

The transmission line may extend parallel with the object (for precision length measurement), or the transmission line could adopt any other predetermined shape, such as an arc of a circle, in which case the predetermined shape and the position of the target will enable an accurate position measurement (such as an angular measurement) to be obtained.

The method in accordance with the invention may be a method employed simply for precision length determination, the result being displayed, or the method may be extended, by feeding the output of the processing means to a suitable controller, to include the step of carrying out a manufacturing step, e.g. cutting, on the object, at a position thereon determined by the precision length measurement. Thus, in a manufacturing operation, movement of the target along the transmission line is arranged to be representative of the movement of the processing tool relative to the work piece.

Moreover, in the case of simple measurement, this may be effected with the target stationary at a position to which it has been moved, whilst in the case of a manufacturing method, one or more processing means may operate at a selected measured position or successive measured positions along the object, as the target is moved along the transmission line. In the latter case, a fast acting processing means is necessary substantially instantaneously to give a length determination corresponding to the instantaneous position of the target, and further features of the present invention, detailed hereinafter, make this possible.

According to another aspect of the invention, there is provided measurement apparatus comprising:

- a transmission line adapted to propagate a signal and return a signal from a target which is movable along the transmission line;
- means for processing the return signal to evaluate the position of the target, characterised in that:
- the transmission line (24) is a line having an impedance which is altered at the position of the target (28) due to proximity of the target material;
- a signal source (18, 20) is provided to generate a fast-rising, short electrical pulse which is directed through a coupler (22) into the input end of the line, whereby the pulse is transmitted as electromagnetic energy along the line and is partially reflected by the impedance change at the input end of the line and partially reflected at the target position; and

- means for measuring the difference in times between which the input end and target reflected electromagnetic signals are returned through the coupler to enable precise determination of the target position along the line.

Thus, in developing the present invention, the Applicants have shown by experimentation that an open electromagnetic transmission line can be designed so that the presence of objects in its vicinity will similarly modify the characteristic impedance and thus cause a detectable reflection. This property has then been utilised by designing a target which can move along the transmission line. The transmission line is itself of such a characteristic impedance that there is preferably a reflection at the input of the transmission line and a reflection from the movable target, and the time difference between these two events is the basis of the precision length measurement.

Traditional laboratory time domain reflectometers utilise a fast-rising step input signal with a rise time of less than around 100 ps and sample the reflected waveform at a sequence of delays, thus requiring many pulses to derive one measurement. In the present invention a different method of processing the reflected waveform is utilised, which does not use a sampler, but extracts a time delay measurement by integration during the period of one or a series of pulses.

In a preferred apparatus, the processing means comprises a flip-flop circuit such as a GaAs high speed flip-flop, which is triggered on and off by respective reflected pulses and causes a precision current source to be turned on and off. The instant length measurement is then indicated by the charge delivered by the current source to an integration circuit following one or multiple signal pulses. This preferred apparatus can provide substantially instantaneous measurement corresponding to the instantaneous position of the target. Thus, the preferred means for processing the TDR output can be designed with the advantage of producing a length measurement from a single pulse. This means that precision length measurement of a relatively fast moving target is available in a fraction of a millisecond.

Description of embodiments

The method and apparatus in accordance with the invention is exemplified in the following description, making reference to the accompanying drawings, in which:-

Figure 1 is a block diagram of a practical arrangement, indicating the components used in one particular embodiment of the sensor system;

Figure 2 is a diagram of alternative designs of the transmission line and target suitable for precision length measurement;

Figure 3 shows an incident pulse appropriate for precision length measurement. The amplitude, rise time and fall time of the pulse may be varied according to the measurement precision required;

Figure 4 shows the reflected wave coupled into the flip-flop and the associated output from the flip-flop; and

Figure 5 shows the associated current in an integration circuit whose output is passed to an analogue-to-digital converter whose reference is derived from a stable current source.

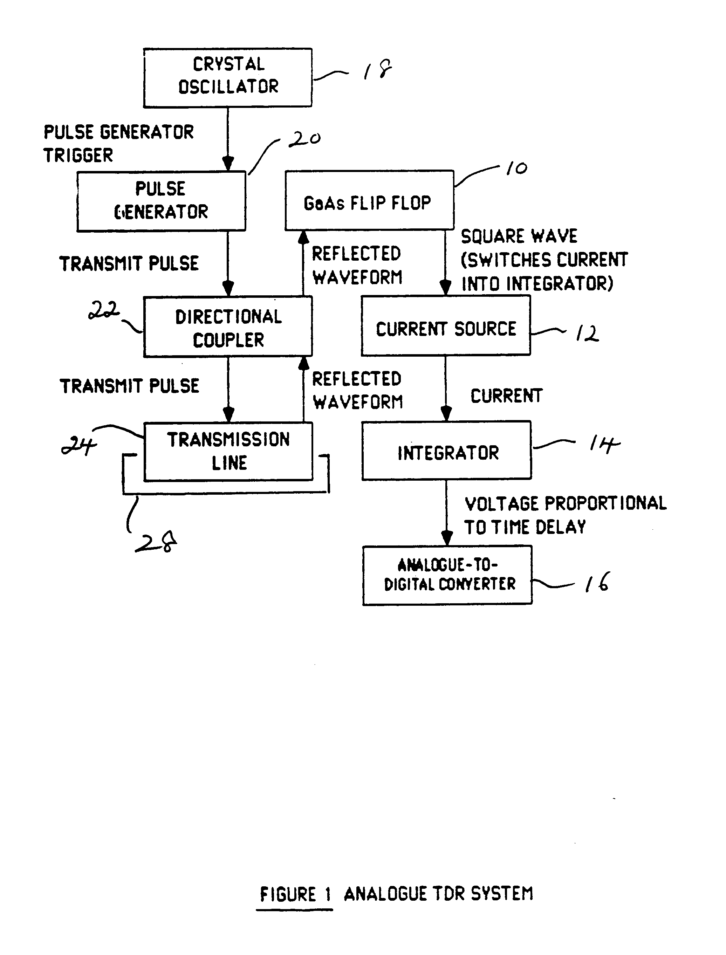

In the preferred apparatus shown in Figure 1, the position of a target 28 along a transmission line 24 is measured by using the reflection from the input end of the transmission line to flip a GaAs flip-flop 10. The reflection from the target 28 then switches the GaAs flip-flop 10 back to its original level. The output from the flip-flop is used to switch a stable current source 12 into an integrator 14 which measures the duty cycle of the current which is proportional to the length of the 'ON' pulse and therefore to the position of the target. The voltage output of the integrator proportional to the time delay is fed to an A/D converter 16. The output from the analogue-to-digital converter 16 may either be passed to a display in a measurement application or to a controller in a manufacturing process.

Figure 1 also shows a signal generator, which comprises a crystal oscillator 18 and a pulse geneerator 20, together with a directional coupler 22 through which the pulse input is fed into the input end of the transmission line 24.

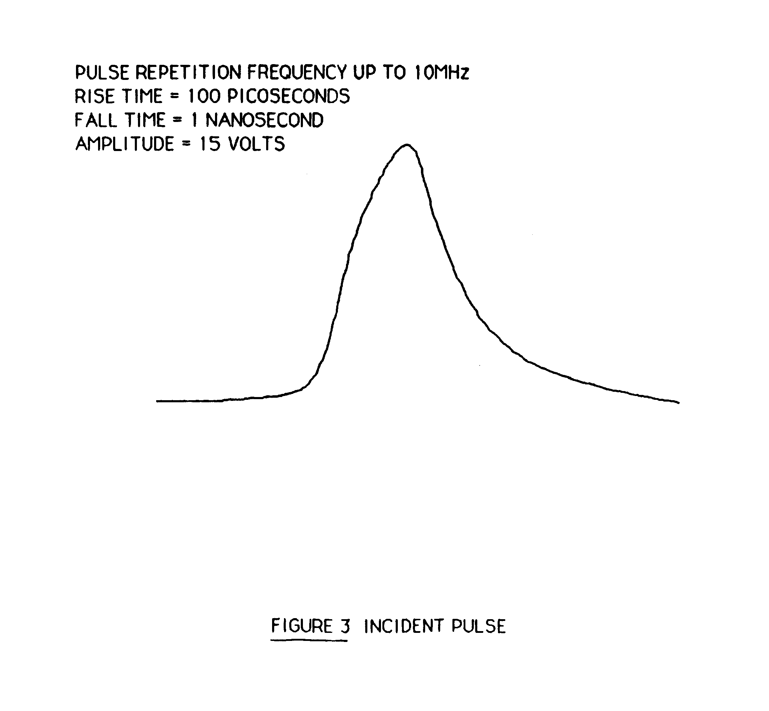

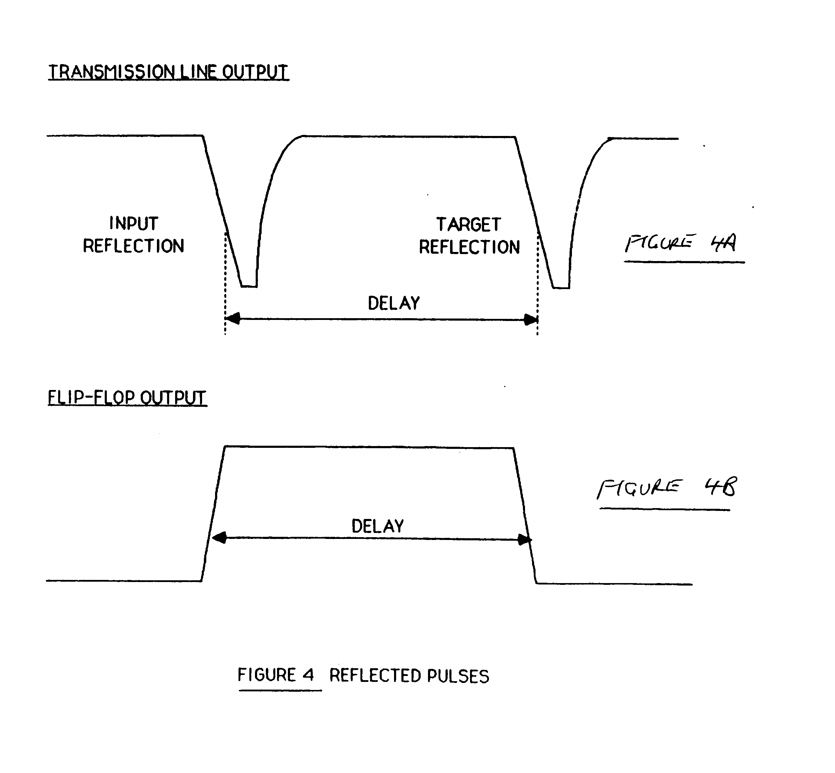

A waveform in the form of a short voltage pulse (Figure 3) is applied to the input end of the transmission line 24 via the directional coupling network 22. The transmission line is of a different impedance to the coupler output and there is thus a reflection due to this impedance discontinuity. The transmission line is then uniform except at the point where the target is located. There is then a reflection at the target, resulting in a complete reflected waveform of the form shown in Figure 4A.

The reflected waveform (Figure 4A) is used to switch the GaAs flip-flop 10 between its two states and gives rise to the output rectangular wave (Figure 4B). This waveform is then used to switch a stable current from source 12 into the integration circuit 14, which measures the duty cycle of the flip-flop output. The time constant of the integration circuit is chosen according to the measurement accuracy required. For instance, if the reflected waveform has root mean square jitter of 10 picoseconds and a timing accuracy of 1 picosecond is required, then the integration circuit must integrate over 100 pulses.

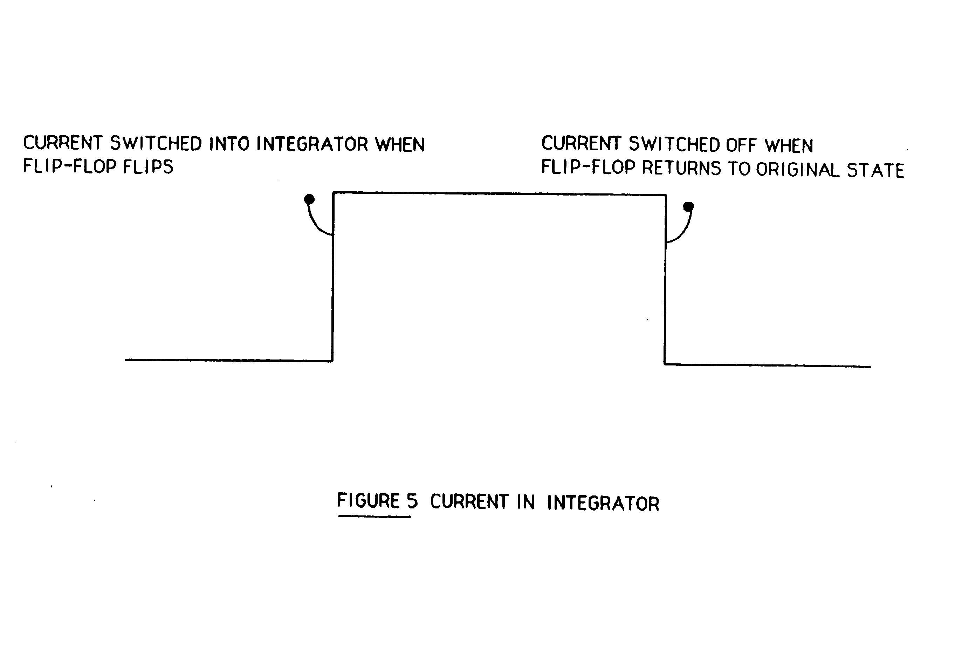

The output voltage (see Figure 5) from the integration circuit 14 is passed to the analogue-to-digital converter 16 whose reference is derived from the stable current source 12. The output from the analogue-to-digital converter 16 is proportional to the time delay (t) of the cursor, which can be converted to a length through the relationship x = ct/2, where (c) is the velocity of propagation of electromagnetic waves down the transmission line. This length can either be displayed or used to position a cutter or other processing tool acting on an object or article disposed parallel to the transmission line.

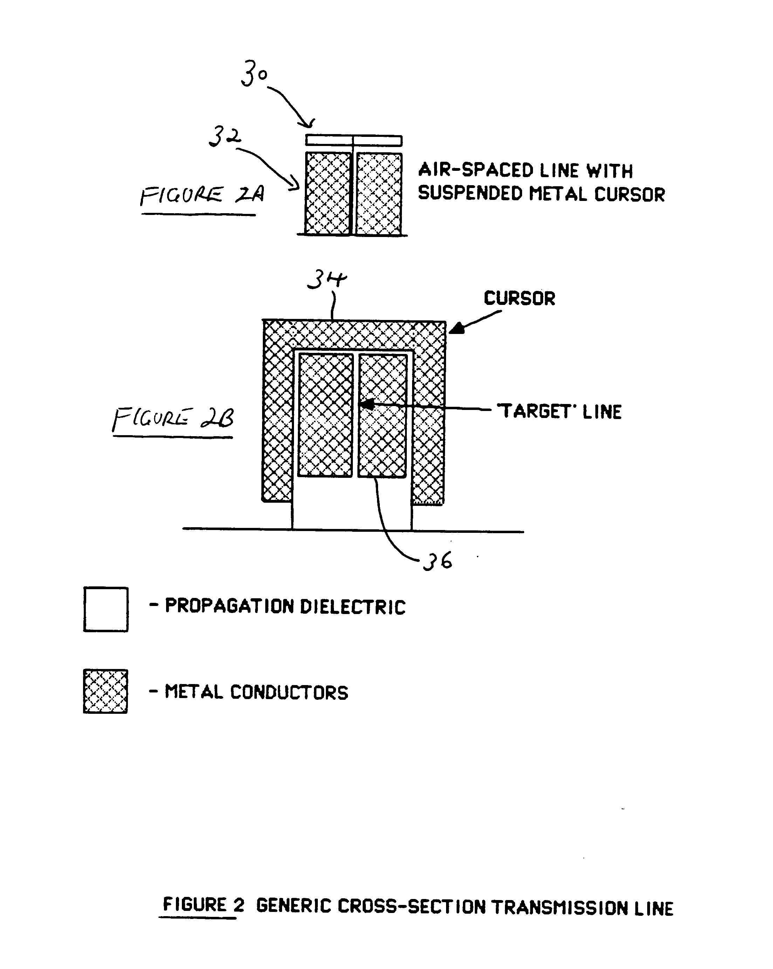

Two embodiments of the transmission line are shown in Figure 2. In Figure 2A, a metal or dielectric cursor 30 is suspended between an air spaced parallel plate transmission line 32. In Figure 2B, a metal or dielectric cursor 34 rides as a saddle along a transmission line 36 which comprises 2 parallel metal plates separated by an insulating layer of dielectric material.

## Claims

1. A method of precision length or position measurement which comprises:- a) extending a transmission line in a predetermined spatial position and orientation with respect to an object on which a length or position measurement is required; b) moving a target along the transmission line; directing a signal into an input end of the line and measuring the time at which a return signal is received from the target, thereby to determine a length or position measurement on the object; characterised in that the transmission line (24) is a line having an impedance altered at the position of the target (28) due to the proximity of the target material, the signal is an electromagnetic signal directed through a coupler (22) into the input end of the line so as to be partially reflected by the impedance change at said input end and partially reflected at the target position, and the difference in times between which the input end and the target position reflected electromagnetic signals are returned through the coupler is measured to enable precise determination of the target position along the line.

2. Measurement apparatus for use in the method of claim 1, comprising:
   - a transmission line adapted to propagate a signal and return a signal from a target which is movable along the transmission line;
   - means for processing the return signal to evaluate the position of the target, characterised in that:
   - the transmission line (24) is a line having an impedance which is altered at the position of the target (28) due to proximity of the target material;
   - a signal source (18, 20) is provided to generate a fast-rising, short electrical pulse which is directed through a coupler (22) into the input end of the line, whereby the pulse is transmitted as electromagnetic energy along the line and is partially reflected by the impedance change at the input end of the line and partially reflected at the target position; and
   - means for measuring the difference in times between which the input end and target reflected electromagnetic signals are returned through the coupler to enable precise determination of the target position along the line.

3. Measurement apparatus according to claim 2, characterised in that the signal source (18, 20) repeatedly rapidly and regularly generates short pulses partially reflected at both the input end of the transmission line and at the target position.

4. Measurement apparatus according to claim 3, characterised in that the processing means includes a bistable device (10) switched into one state upon receipt of partially reflected signal after partial reflection of the signal at the input end of the line and switched back to its other state by partial reflection of the signal at the target position.

5. Measurement apparatus according to claim 4, characterised in that the processing means includes a current source (12) turned on and off by the two successive changes in state of the bistable device (10), and an integrator (14) for measuring the charge delivered by the current source and which is representative of the target position to be measured.

6. Measurement apparatus according to claim 5, characterised in that the bistable device (10) is a GaAs or ECL flip-flop.

7. Measurement apparatus according to claim 5 or claim 6 characterised in that the processing means is operative to make a precision length measurement from the charge delivered by the source due to a single signal pulse or the total charge delivered by the source due to a predetermined number of signal pulses input to the transmission line.

8. Measurement apparatus according to any of claims 2 to 7, characterised in that the output side of the processing means is coupled to a length measurement display device and/or to a controller for acting on the object at a position corresponding to the measured position of the target.

9. Measurement apparatus according to any of claims 2 to 8, characterised in that the target is a cursor (30) suspended between the plates of an air spaced parallel plate transmission line (32).

10. Measurement apparatus according to any of claims 2 to 8, wherein the target comprises cursor (34) riding as a saddle on a transmission line (36) which comprises two parallel metal plates separated by dielectric material.

**Patentansprüche**

1. Verfahren zur Präzisionslängen- oder Positionsmessung, umfassend:
   a) das sich erstreckende Anordnen einer Uebertragungsleitung in eine vorbestimmte, räumliche Position und Orientierung in bezug auf ein Objekt, auf welchem eine Längen- oder Positionsmessung erforderlich ist;
   b) Bewegen eines Zielobjektes entlang der Uebertragungsleitung; Richten eines Signals in ein Eingabeende der Leitung und Messen der Zeit, bei welcher ein Rücksignal vom Zielobjekt empfangen wird, um dadurch eine Längen- oder Positionsmessung auf dem Objekt zu bestimmen, dadurch gekennzeichnet, dass
   die Uebertragungsleitung (24) eine Leitung mit einer Impedanz (Dämpfung) ist, welche an der Position des Zielobjektes (28) infolge der Nähe des Zielobjektmaterials wechselt, wobei das Signal ein elektromagnetisches Signal ist, das durch einen Richtkoppler (22) in das Eingabeende der Leitung gerichtet ist, so dass es teilweise durch den Impedanzwechsel bei besagtem Eingabeende und partiell bei der Zielobjektposition reflektiert wird, und dass die Differenz zwischen den Zeiten, zwischen welchen die Eingabeende- und die Zielobjektposition-reflektierten elektromagnetischen Signale durch den Koppler zurückgeführt werden, gemessen wird, um eine genaue Bestimmung der Zielobjektposition entlang der Leitung zu ermöglichen.

2. Messvorrichtung für die Verwendung im Verfahren nach Anspruch 1, umfassend:
   - eine Uebertragungsleitung, vorgesehen, um ein Signal und ein Rücksignal von einem Zielobjekt zu übertragen, welches entlang der Uebertragungsleitung bewegbar ist;
   - Mittel für das Verarbeiten des Rücksignals, um die Position des Zielobjektes zu ermitteln, dadurch gekennzeichnet, dass:
   - die Uebertragungsleitung (24) eine Leitung ist mit einer Impedanz, die an der Position des Zielobjektes (28) infolge der Nähe des Zielobjektmaterials wechselt;
   - eine Signalquelle (18, 20), die vorgesehen ist, um einen schnell ansteigenden, kurzen elektrischen Impuls zu erzeugen, der durch einen Koppler (22) in das Eingabeende der Leitung gerichtet ist, wodurch der Impuls als elektromagnetische Energie entlang der Leitung übertragen wird und partiell reflektiert wird durch den Impedanzwechsel am Eingabeende der Leitung und partiell reflektiert wird an der Position des Zielobjektes; und
   - Mittel vorgesehen sind für das Messen des Unterschiedes der Zeiten, zwischen welchen die vom Eingabeende und vom Zielobjekt reflektierten elektromagnetischen Signale durch den Koppler zurückkehren, um eine genaue Bestimmung der Zielobjektposition entlang der Leitung zu ermöglichen.

3. Messvorrichtung nach Anspruch 2, dadurch gekennzeichnet, dass die Signalquelle (18, 20) schnell wiederholend und regelmässig kurze Impulse erzeugt, die sowohl beim Eingabeende der Uebertragungsleitung als auch bei der Zielobjektposition partiell reflektiert werden.

4. Messvorrichtung nach Anspruch 3, dadurch gekennzeichnet, dass die Verarbeitungsmittel ein bistabiles Gerät (10) beinhalten, geschaltet zwischen einem Zustand, bei Erhalt des partiell reflektierten Signals nach partieller Reflexion des Signals am Eingabeende der Leitung und zurückgeschaltet in seinen anderen Zustand durch partielle Reflexion des Signals bei der Zielobjektposition.

5. Messvorrichtung nach Anspruch 4, dadurch gekennzeichnet, dass die Verarbeitungsmittel eine Stromquelle (12) beinhalten, ein- und ausgeschaltet durch zwei sich nachfolgende Veränderungen des Zustandes des bistabilen Gerätes (10), und einen Integrator (14) für das Messen der Last, bewirkt durch die Stromquelle, und die repräsentativ ist für die Zielobjektposition, die zu messen ist.

6. Messvorrichtung nach Anspruch 5, dadurch gekennzeichnet, dass das bistabile Gerät (10) ein GaAs-oder ECL-Flip-Flop ist.

7. Messvorrichtung nach einem der Ansprüche 5 oder 6, dadurch gekennzeichnet, dass die Verarbeitungsmittel betreibbar sind, um eine Präzisionslängenmessung auszuführen von der Last, erzeugt durch die Quelle infolge eines einzigen Signalimpulses oder der totalen Last, erzeugt durch die Quelle infolge einer vorbestimmten Anzahl Signalimpulse, eingegeben an die Uebertragungsleitung.

8. Messvorrichtung nach irgendeinem der Ansprüche 2 bis 7, dadurch gekennzeichnet, dass die Ausgabeseite der Verarbeitungsmittel an eine Längenmess-Displayvorrichtung angeschlossen ist und/oder an eine Steuerung für die Bearbeitung auf einem Objekt an einer Position, die der gemessenen Position auf dem Zielobjekt entspricht.

9. Messvorrichtung nach irgendeinem der Ansprüche 2 bis 8, dadurch gekennzeichnet, dass das Zielobjekt ein Schieber (30) ist, schwebend angeordnet zwischen den Platten von einer luftbeabstandeten, parallelen Plattenübertragungsleitung (32).

10. Messvorrichtung nach irgendeinem der Ansprüche 2 bis 8, dadurch gekennzeichnet, dass das Zielobjekt einen Schieber (34) umfasst, der sattelartig auf einer Uebertragungsleitung (36) gehalten wird, welche zwei parallele Metallplatten umfasst, getrennt durch dielektrisches Material.

**Revendications**

1. Une méthode de mesure de précision d'une longueur ou d'une position qui consiste à :

   a) installer une ligne de transmission avec une orientation et une position spatiale prédéterminées par rapport à un objet sur lequel on veut mesurer une longueur ou une position ;

   b) déplacer une cible le long de la ligne de transmission ; envoyer un signal au niveau de la borne d'entrée de la ligne et mesurer le temps au bout duquel le signal de retour est reçu par la cible, déterminant ainsi une mesure de position ou de longueur sur l'objet ;

   caractérisée en ce que la ligne de transmission (24) est une ligne dont l'impédance est modifiée au niveau de la position de la cible (28) du fait de la proximité du matériau de la cible, le signal est un signal électromagnétique envoyé par l'intermédiaire d'un coupleur (22) dans la borne d'entrée de la ligne de façon à être partiellement réfléchi par le changement d'impédance au niveau de ladite entrée et partiellement réfléchi au niveau de la position de la cible, et la différence des temps auxquels les signaux électromagnétiques réfléchis par la borne d'entrée et par la position de la cible sont renvoyés dans le coupleur est mesurée pour permettre une détermination précise de la position de la cible le long de la ligne.

2. Un appareil de mesure pour utiliser dans la méthode de la revendication 1, comportant :

   - une ligne de transmission propre à la propagation d'un signal et le retour d'un signal par une cible déplaçable le long de la ligne de transmission ;

   - des moyens pour traiter le signal de retour de façon à évaluer la position de la cible,

   caractérisés en ce que :

   . la ligne de transmission (24) est une ligne présentant une impédance qui est modifiée au point de position de la cible (28) à cause de la proximité du matériau de la cible ;

   . un générateur de signal (18, 20) est utilisé pour envoyer une impulsion électrique brève, à montée rapide, passant à travers un coupleur (22) dans l'extrémité d'entrée de la ligne, par laquelle l'impulsion est transmise en tant qu'énergie électromagnétique le long de la ligne et se trouve partiellement réfléchie par le changement d'impédance au niveau de la borne d'entrée de la ligne, et partiellement réfléchie aussi au niveau de la position de la cible ; et

   . des moyens pour mesurer la différence entre les temps auxquels les signaux électromagnétiques réfléchis par la borne d'entrée et par la cible sont renvoyés dans le coupleur de façon à permettre une détermination précise de la position de la cible le long de la ligne.

3. Un appareil de mesure conforme à la revendication 2, caractérisé en ce que le générateur de signal (18, 20) crée de façon répétée, rapide et régulière, des impulsions courtes qui sont partiellement réfléchies à la fois par la borne d'entrée de la ligne de transmission et par la position de la cible.

4. Un appareil de mesure conforme à la revendication 3, caractérisé en ce que les moyens de traitement de l'information comportent un dispositif bistable (10) commuté dans un premier état à la réception du signal partiellement réfléchi au niveau de la borne d'entrée de la ligne, et commuté vers son état antérieur à la réception du signal partiellement réfléchi au niveau de la position de la cible.

5. Un appareil de mesure conforme à la revendication 4, caractérisé en ce que les moyens de traitement de l'information comportent une source de courant (12) allumée et éteinte par les deux changements successifs d'état du dispositif bistable (10), et un intégrateur (14) pour mesurer la charge délivrée par la source de courant et qui est représentative de la position de la cible à mesurer.

6. Un appareil de mesure conforme à la revendication 5, caractérisé en ce que le dispositif bistable (10) est un dispositif du type flip-flop au GaAs ou flip-flop ECL.

7. Un appareil de mesure conforme à la revendication 5 ou à la revendication 6, caractérisé en ce que les moyens de traitement de l'information sont efficaces pour faire une mesure de précision d'une longueur à partir de la charge délivrée par la source suite à une impulsion unique ou bien à partir de la charge totale délivrée par la source suite à un nombre prédéterminé d'impulsions envoyées à la ligne de transmission.

8. Un appareil de mesure conforme à n'importe laquelle des revendications 2 à 7, caractérisé en ce que la sortie des moyens de traitement de l'information est couplée à un dispositif d'affichage de la mesure de longueur et/ou à un dispositif de commande pour agir sur l'objet à une position correspondant à la position mesurée de la cible.

9. Un appareil de mesure conforme à n'importe laquelle des revendications 2 à 8, caractérisé en ce que la cible est un curseur (30) suspendu entre les plaques d'une ligne de transmission (32) constituée par deux plaques parallèles séparées par de l'air.

10. Un appareil de mesure conforme à n'importe laquelle des revendications 2 à 8, dans lequel la cible comporte un curseur (34) se déplaçant à cheval sur une ligne de transmission (36) qui comporte deux plaques métalliques parallèles séparées par un matériau diélectrique.

CRYSTAL
OSCILLATOR — _18_

PULSE GENERATOR
TRIGGER

_20_

PULSE
GENERATOR

GaAs FLIP FLOP — _10_

REFLECTED
WAVEFORM

SQUARE WAVE
(SWITCHES CURRENT
INTO INTEGRATOR)

TRANSMIT PULSE

_22_ DIRECTIONAL
COUPLER

CURRENT SOURCE — _12_

TRANSMIT PULSE

REFLECTED
WAVEFORM

CURRENT

_24_ TRANSMISSION
LINE

INTEGRATOR — _14_

_28_

VOLTAGE PROPORTIONAL
TO TIME DELAY

ANALOGUE-TO-
DIGITAL CONVERTER — _16_

FIGURE 1  ANALOGUE TDR SYSTEM

30

32

*FIGURE 2A*

AIR-SPACED LINE WITH
SUSPENDED METAL CURSOR

34

*FIGURE 2B*

CURSOR

'TARGET' LINE

36

☐ – PROPAGATION DIELECTRIC

▨ – METAL CONDUCTORS

FIGURE 2 GENERIC CROSS-SECTION TRANSMISSION LINE

PULSE REPETITION FREQUENCY UP TO 10MHz
RISE TIME = 100 PICOSECONDS
FALL TIME = 1 NANOSECOND
AMPLITUDE = 15 VOLTS

FIGURE 3  INCIDENT PULSE

EP 0 336 025 B1

## TRANSMISSION LINE OUTPUT

INPUT
REFLECTION

TARGET
REFLECTION

*FIGURE 4A*

DELAY

## FLIP-FLOP OUTPUT

*FIGURE 4B*

DELAY

FIGURE 4  REFLECTED PULSES

CURRENT SWITCHED INTO INTEGRATOR WHEN FLIP-FLOP FLIPS

CURRENT SWITCHED OFF WHEN FLIP-FLOP RETURNS TO ORIGINAL STATE

FIGURE 5  CURRENT IN INTEGRATOR